# EUROPEAN PATENT APPLICATION

(11) **EP 4 116 577 A1**
(43) Date of publication of application: **11.01.2023**
(21) Application number: 21382597.9
(22) Date of filing: 05.07.2021
(51) Int. Cl.: F03D 7/02

(54) **WIND TURBINE CONTROL**

(71) Applicant: General Electric Renovables España S.L., 08005 Barcelona (ES)
(72) Inventor: PICARD, Thomas Jean, 08005 Barcelona (ES); PERON, Virginie, 44200 Nantes (FR)
(74) Representative: de Rooij, Mathieu Julien

(57) **Abstract**

The present disclosure relates to a wind turbine comprising a wind turbine rotor with a plurality of blades, a generator operatively coupled to the wind turbine rotor for generating electrical power and a power electronic converter for converting electrical power generated by the generator to a converted AC power of predetermined frequency and voltage. The wind turbine further comprises a wind turbine controller configured to receive values of one or more operational parameters of the wind turbine from one or more sensors and further configured to temporarily increase a speed of the generator to above a nominal generator speed if the values of the operational parameters satisfy a potential trip criterion. The present disclosure also relates to methods for controlling wind turbines.

## Description

The present disclosure relates to wind turbines, in particular the control of wind turbines. The present disclosure particularly relates to methods and systems for controlling wind turbines to avoid tripping of the wind turbines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly or through a gearbox. This way, the generator produces electricity which can be supplied to the electrical grid.

Wind turbines further typically comprises a power electronic converter for converting electrical power generated by the generator to a converted AC ("Alternating Current") power of predetermined frequency and voltage. The converted AC power is then supplied to a main wind turbine transformer having a low voltage side and a high voltage side for transforming the converted AC power to a higher voltage and delivering the power to the grid.

Different topologies for wind turbine generators and power electronic converters are known. One such topology is a DFIG ("Doubly Fed Induction Generator"). In the DFIG configuration, a stator of the generator is directly connected to the grid. The rotor of the generator comprises a plurality of coils. These coils are electrically connected to the grid through a power electronic converter comprising a rotor side converter, a DC-link, and a grid side converter.

In another known topology, the rotor of the generator carries a plurality of permanent magnets. The stator of the rotor is connected to the grid through a so-called "full converter". The full converter includes a machine side converter, a DC-link, and a grid side converter.

A wind turbine further typically comprises a wind turbine controller. The wind turbine controller may be configured to determine suitable actuator setpoints for the wind turbine based on the prevailing circumstances. The actuator setpoints for modern variable speed wind turbines include e.g. the generator torque and the pitch angle of the blades. Through control of the pitch angle(s) of the blade(s) and the generator torque, the speed of the rotor may be controlled, as well as the electrical power output, aerodynamic thrust and further mechanical loads. The purpose of the control system is generally to maximize electrical power output while at the same time keeping loads in the wind turbine at an acceptable level.

Normal or standard operation of a wind turbine may generally be along a predefined power curve, which prescribes the operation of the wind turbine as a function of the prevailing wind speed. Normal operation includes different operational ranges. In lower wind speed ranges, the objective is generally to maximize electrical power output. In higher wind speed ranges, particularly wind speeds above nominal wind speed, the operation of the wind turbine is focused on keeping loads under control, while maintaining electrical power output at a predetermined level.

As mentioned before, the actuator setpoints of torque and pitch (but also other actuators such as yaw) may be changed in accordance with circumstances. Such circumstances may include e.g. the average wind speed, turbulence, wind shear, air density and other meteorological conditions but also internal conditions like vibrations, mechanical loading or component temperatures etc. They may also include specific external demands to reduce noise, an interruption of operation for maintenance, grid based situations of e.g. demand of reduction of active power, or a grid event such as a low voltage event, a zero voltage event, an increase in grid frequency or other.

The wind turbine controller may be programmed to, based on a set of measured variables received from a variety of sensors, send signals to various systems (such as e.g. the generator, the pitch system and a yaw system) to influence the operation of the wind turbine. The sensors may include rotor speed sensor, load sensors (strain gauges or accelerometers), anemometer, weathervane, and others.

Different circumstances can cause tripping of the wind turbine. A trip may herein be regarded as a sudden or immediate shutdown of a wind turbine in response to an exceptional or unexpected event or a series of events. The wind turbine operation is thus interrupted, and until the wind turbine restarts, no power is delivered to the grid.

High currents, and particularly currents above a predefined threshold, and/or currents that are above a predefined threshold for a specific period of time can lead to tripping of the converter, and thereby to tripping of the wind turbines.

### SUMMARY

In an aspect of the present disclosure, a wind turbine is provided, which comprises a wind turbine rotor with a plurality of blades supported on a support structure, and a generator operatively coupled to the wind turbine rotor for generating electrical power. The wind turbine further comprises a power electronic converter for converting electrical power generated by the generator to a converted AC power of predetermined frequency and voltage. The wind turbine further comprises a wind turbine controller configured to receive values of one or more operational parameters of the wind turbine from one or more sensors and the controller is further configured to temporarily increase a speed of the generator to above a nominal speed if the values of the operational parameters satisfy a potential trip criterion.

In accordance with this aspect, a wind turbine is provided which is capable of delaying and/or avoiding tripping of the wind turbine, and particularly tripping of the wind turbine caused by an undesired event in the power electronic converter. By temporarily increasing the rotational speed of the wind turbine, currents can be lowered in the machine side converter, thereby avoiding or delaying a trip of the converter.

A trip criterion may herein be regarded as one value or a combination of multiple values of operational parameters, variables, or actuator setpoints of the wind turbine, that will cause tripping of a wind turbine component and/or the wind turbine.

A potential trip criterion may herein be regarded as one value or a combination of multiple values of operational parameters, variables or actuator setpoints that, if they continue over time, will lead to a satisfaction of a trip criterion.

In a further aspect, a method for controlling a wind turbine is provided. The method comprises receiving values of operational parameters of the wind turbine and determining that one or more of the operational parameters satisfy a potential trip criterion for potentially tripping the wind turbine. The method further comprises sending instructions to wind turbine actuators to temporarily increase a speed of a wind turbine rotor of the wind turbine to a level above a nominal rotor speed and determining that the operational parameters do not satisfy the potential trip criterion anymore. The method then further comprises sending instructions to wind turbine actuators to reduce the speed of the wind turbine rotor to the nominal rotor speed.

A method in accordance with this aspect may be implemented in a wind turbine controller.

In yet a further aspect, a method for operating a wind turbine is provided. The method comprises determining one or more of the following operational parameters: currents in a machine side converter, ambient temperature and wind speed. The method comprises determining that the operational parameters fulfil a criterion for an operational change. The method further comprises increasing a speed of the generator to a level above a nominal generator speed and decreasing the speed of the generator to the nominal generator speed or below when the operational parameters fulfil a criterion for returning to default operation.

An operational change may herein be regarded as a change of operational settings of the wind turbine i.e. a change in actuator setpoints and/or boundary conditions governing the operation of the wind turbine.

### BRIEF DESCRIPTION OF THE DRAWINGS

Figure 1 schematically illustrates a perspective view of one example of a wind turbine;
Figure 2 illustrates a simplified, internal view of one example of the nacelle of the wind turbine of figure 1;
Figure 3A schematically illustrates the occurrence of current levels in a machine side converter at different ambient temperatures;
Figure 3B schematically illustrates a relation between generator rotor speed and current levels in a machine side converter;
Figure 3C illustrates an example of a method for controlling a wind turbine;
Figure 4 schematically illustrates examples of a standard and a modified operation of a wind turbine; and
Figure 5 schematically illustrates an example of a method for operating a wind turbine.

### DETAILED DESCRIPTION OF EXAMPLES

Reference now will be made in detail to embodiments of the invention, one or more examples of which are illustrated in the drawings. Each example is provided by way of explanation of the invention, not as a limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

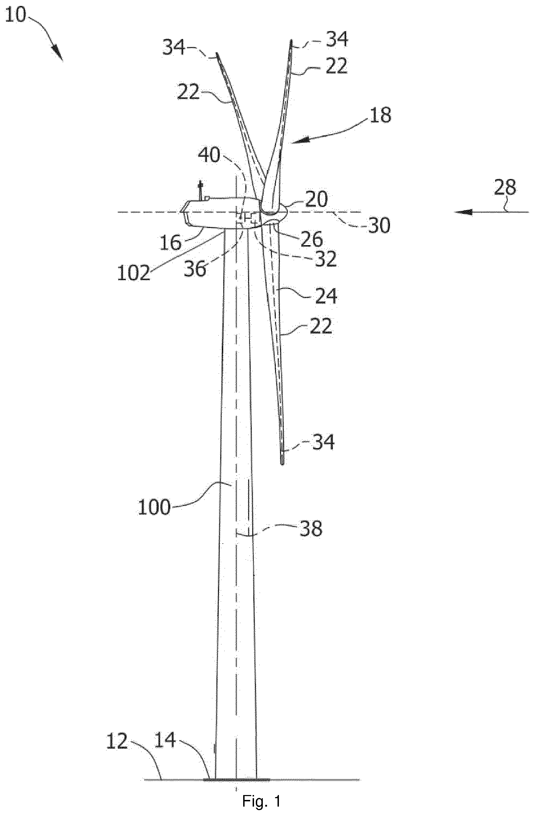

FIG. 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 100 that extends from a support system 14 on a ground 12, a nacelle 16 mounted on tower 100, and a rotor 18 that is coupled to nacelle 16. Figure 1 specifically depicts an onshore wind turbine, but the present disclosure also relates to offshore wind turbines.

The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 100 may be fabricated from tubular steel to define a cavity (not shown in Figure 1) between a support system 14 and the nacelle 16 arranged at a top end 102 of tower 100. In an alternative embodiment, the tower 100 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in Figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote control center. The wind turbine controller 36 includes a processor 40 configured to perform the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

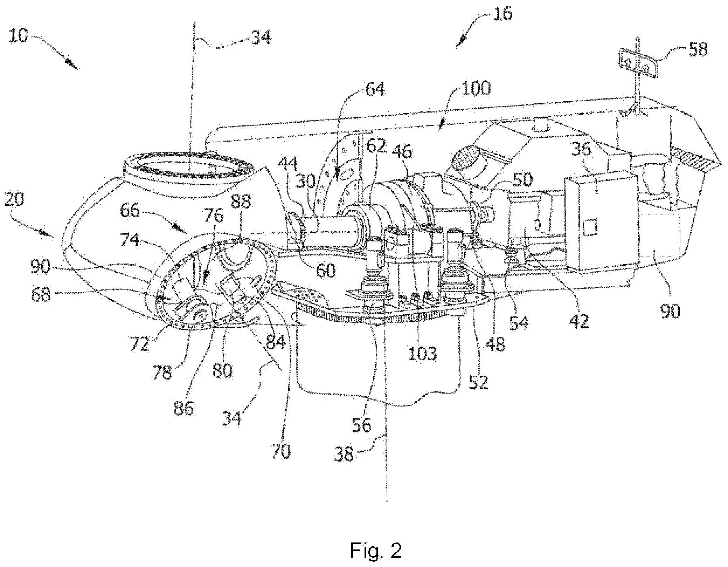

FIG. 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high speed shaft 48 by translating the relatively slow rotational movement of the rotor 18 and of the main shaft 44 into a relatively fast rotational movement of the high speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage (e.g. 10 - 35 KV). Said electrical energy is conducted via power cables 160 from the nacelle 16 into the tower 100.

The gearbox 46, generator 42 in transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 100 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

The nacelle 16 also may include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system which may include a wind vane and anemometer. The meteorological measurement system 58 can provide information to the wind turbine controller 36 that may include wind direction 28 and/or wind speed. In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in Figure 1) for modulating the pitch angel of a rotor blade 22 along the pitch axis 34. Only one of three pitch drive systems 68 is shown in Figure 2.

In the example, the pitch assembly 66 includes at least one pitch bearing 72 coupled to hub 20 and to a respective rotor blade 22 (shown in FIG. 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery, electric capacitors hence letter or an electrical generator driven by the rotation of the hub 20, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer surface of hub 20 and may be coupled, directly or indirectly, to outer surface.

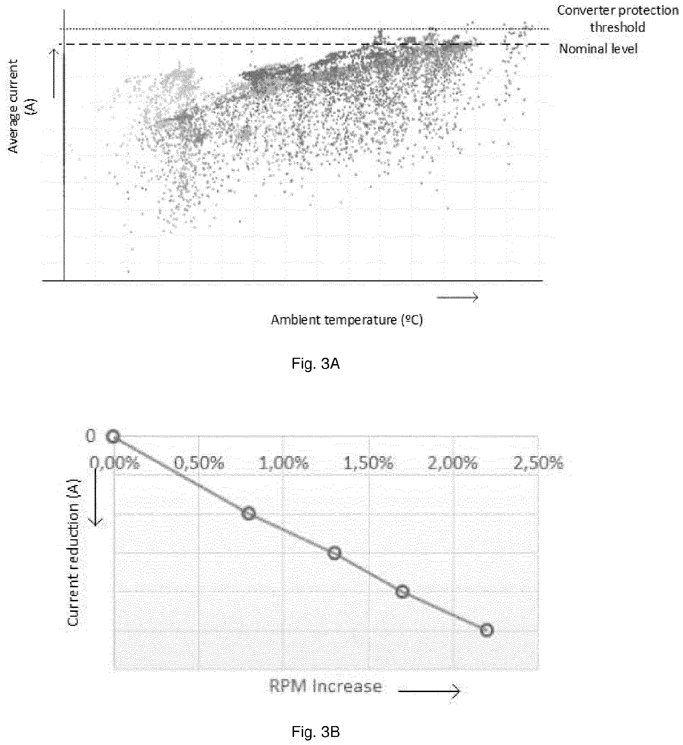

Figure 3A schematically illustrates the occurrence of current levels in a machine side converter at different ambient temperatures. The y-axis represents average currents (10 minute intervals), and the x-axis represents ambient temperature. The data plotted in figure 3A corresponds to wind turbines employing a permanent magnet generator at different sites. A tendency may be seen in figure 3A that at higher ambient temperatures, the current levels of the machine side converter tend to be higher. Without wishing to be bound to a specific theory, it is believed that this phenomenon is caused by a decrease of strength of the magnets in the permanent magnet generator at higher ambient temperatures. In order to maintain a power level, a torque in the machine side converter is increased and this leads to higher currents.

Of course, the current level will also depend on the operational situation of the wind turbine and in particular on the wind speed. At wind speeds above the nominal wind speed, the power output will normally be the nominal or "rated" power of the wind turbine. At wind speeds below the nominal wind speed, the power output will be lower.

Also indicated in figure 3A are two reference lines. The lower reference line indicates nominal or rated currents for the converter. This is the level of currents expected for the converter at nominal power output. The upper line indicates a level of currents above which operation of the converter may be jeopardized, i.e. a threshold above which operation is not sustainable. The IGBT's, diodes etc. of the converter will have an operational limit above which they can get damaged. The converter protection threshold is a safety margin above the nominal current level.

If currents reach the converter protection threshold, generally the converter does not necessarily trip immediately. Depending on the converter, different security mechanisms may be implemented. One security mechanism may define a function of both current and time that if the function reaches a specific level, the converter will trip. Tripping of the converter will lead to tripping of the wind turbine. One such function is i².t being above a threshold, wherein i is a current in a machine side converter, and t is a time period for which the current in the machine side converter is above a maximum level. So, a high level of current can be sustained for a short period of time, but not for a prolonged period of time.

It may be seen in figure 3A that at higher ambient temperatures, the current may reach levels above the converter protection threshold and may thus lead to tripping of the wind turbine. It has been found that in specific sites with higher ambient temperatures e.g. above 25°C or above 30°C for several hours during the day in combination with high wind speeds can lead to tripping of the wind turbine.

Figure 3B schematically illustrates a relation between generator rotor speed and current levels in a machine side converter. For a given power level, generator currents and currents in the machine side converter are inversely proportional to generator rotor speed. The generator rotor speed is directly proportional to the speed of rotation of the wind turbine rotor in case of a direct drive wind turbine and in case of a wind turbine with a gearbox with a constant transmission ratio. It has been found that a small increase in RPM of e.g. 1 or 2% can lead to a reduction in current levels that is sufficient to postpone or avoid tripping of the machine side converter.

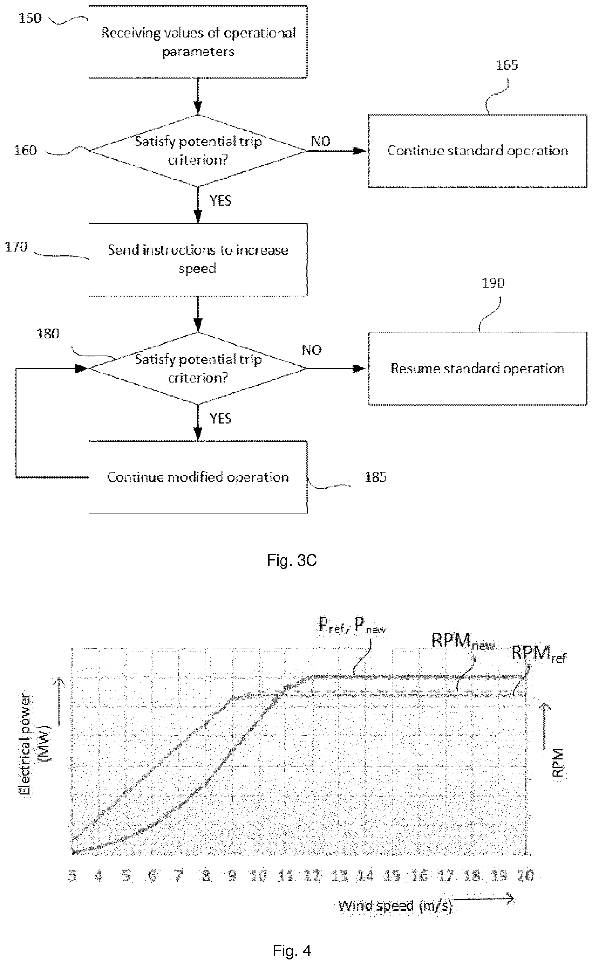

Figure 3C illustrates an example of a method for controlling a wind turbine. A method for controlling a wind turbine comprises, at block 150, receiving values of operational parameters of the wind turbine. The method further comprises, at block 160, determining that one or more of the operational parameters satisfy a potential trip criterion for potentially tripping the wind turbine. The method comprises, at block 170, sending instructions to wind turbine actuators to temporarily increase a speed of a wind turbine rotor of the wind turbine to a level above a nominal rotor speed. At block 180, the method comprises determining that the operational parameters do not satisfy the potential trip criterion anymore, and at block 190, sending instructions to wind turbine actuators to reduce the speed of the wind turbine rotor to the nominal rotor speed.

At block 150, the wind turbine controller may receive values of operational parameters from a plurality of different sensors. Such sensors may include ambient temperature sensors, component temperature sensors, and also sensors indicating current levels. These parameters may be indicative of converter temperatures and converter current levels, and may therefore be used to determine a potential trip situation of the machine side converter as commented before.

However, other sensors may also be used, particularly in connection with other potential trip situations. Such sensors include strain gauges, vibration sensors, and other sensors to indicate loads. Such sensors may be arranged with or indicative of the operational situation of the converter, or the generator, or the wind turbine rotor or other.

At block 160, it may be evaluated whether a particular operational parameter or a combination of operational parameters satisfy a potential trip criterion i.e. it is analyzed whether the levels for the different parameters are sustainable in time, or whether a prolonged operation at these levels will lead to a trip of a wind turbine or component. If the potential trip criterion is not satisfied, the standard or normal operation may be continued. A standard operation in this context may particularly denote an operation according to a predetermined power curve respecting both a nominal power of the wind turbine, and a nominal speed of the rotor of the wind turbine or generator rotor.

If at block 160, it is found that one or more of predefined potential trip criterions is satisfied, then the controller may send instructions, at block 170, to temporarily increase a rotor speed of the generator. As explained before, a temporary increase of the rotor speed can lower currents in the machine side converter and avoid the currents reaching a threshold above which the security of the converter components may be compromised. In other examples, such a temporary increase can avoid resonance in a wind turbine. By changing the rotor speed, the excitation frequency of specific loads can be changed and resonance can be avoided. A potential situation in which loads or vibrations reach a level that would lead to tripping of the wind turbine may thus be avoided.

The instructions sent by the controller, at block 170, may include settings of actuators like pitch actuators and/or generator torque. In examples, more than one mode of operation may be predefined in the controller, including a default or standard mode of operation, and an adapted or modified mode of operation. Each of these modes of operation may have predefined rules wherein, based on values of sensors including e.g. rotor speed, loads, pitch angle etc., the actuator setpoints are adjusted. In this example, at block 170, the modified mode of operation may be adapted.

In an example, the mode of operation or the increased rotational speed may be maintained for a predefined period of time. In other examples, at block 180, the adapted mode of operation may be maintained until the potential trip criterion is not satisfied anymore, e.g. until the currents in the machine side converter are below a predefined threshold. In order to avoid hysteresis, a switch-back to the standard mode of operation respecting the nominal rotor speed, may be carried out if the currents are below the predefined security threshold for a minimum period of time. It will be clear that in other examples, or in other potential trip cases, a return to normal operation may depend on parameters which are different from current levels.

In examples, the potential trip criterion for potentially tripping the wind turbine may be a criterion for potentially tripping a power electronic converter.

In examples, the operational parameters which are analyzed or taken into account for a potential trip evaluation include one or more currents in a machine side converter. Alternatively or additionally, the operational parameters include an ambient temperature and/or a temperature in a wind turbine component.

In some examples, the level above the nominal rotor speed may be 5% or less above the nominal rotor speed, and specifically 3% or less above the nominal rotor speed. It has been found that even small increases of nominal rotor speed can sufficiently reduce the current levels in the converter and at the same time the potential increase in loads is low enough that the wind turbine life time is not affected.

In examples, temporarily increasing the speed of the wind turbine rotor of the wind turbine to a level above a nominal rotor speed comprises maintaining a power of the wind turbine at a nominal power.

In examples, the speed of the wind turbine rotor of the wind turbine may be increased to the level above the nominal rotor speed for 30 minutes or less, specifically for 20 minutes or less.

Figure 4 schematically illustrates examples of a standard and a modified operation of a wind turbine. In accordance with an aspect of the present disclosure, a wind turbine is provided which comprises a wind turbine rotor with a plurality of blades, a generator operatively coupled to the wind turbine rotor for generating electrical power and a power electronic converter for converting electrical power generated by the generator to a converted AC power of predetermined frequency and voltage. The wind turbine further comprises a wind turbine controller configured to receive values of one or more operational parameters of the wind turbine from one or more sensors and further configured to temporarily increase a speed of the generator to above a nominal speed if the values of the operational parameters satisfy a potential trip criterion.

In examples, the generator may be a DFIG generator. In further examples, the generator may be a permanent magnet generator. The present disclosure is not limited to a specific generator and/or converter topology.

As mentioned before, the level above the nominal rotor speed may be 5% or less above the nominal rotor speed, and specifically 3% or less above the nominal rotor speed. In some examples, the level above the nominal speed may be approximately 2%.

As mentioned before, the wind turbine controller may further be configured to maintain a power of the wind turbine at a nominal power.

With reference to figure 4, two separate power curves are shown. A first power curve, which indicates the active power output of the wind turbine as a function of wind speed in a standard or default mode of operation. The power curve may correspond to a classic wind turbine control in which rotor speed and output power are increased from a certain wind speed to a first wind speed (in the example of figure 4, around 9 m/s) at which the nominal rotor speed is reached. From this wind speed onwards, the rotor speed stays constant at the nominal level until nominal wind speed is reached (in the example of figure 4, around 12 m/s). From the nominal wind speed onwards, both rotor speed and power output are maintained constant. This is usually achieved through pitching of the wind turbine blades.

A second power curve indicates the active power output of the wind turbine as a function of wind speed in an adapted or modified mode of operation. It may be seen that the power curves substantially completely overlap. I.e. the power output of the wind turbine is not changed as a function of wind speed in the modified mode of operation.

In the same figure 4, two separate curves indicating RPM (Revolutions Per Minute) for the generator in the two different modes of operation. In this example, at wind speeds from approximately 9 m/s onwards (at which the nominal rotor speed is reached), the rotor speed may be higher than the nominal rotor speed.

When a potential trip criterion is satisfied, the wind turbine controller may switch from a default mode of operation to a modified mode of operation with a rotor speed above a nominal rotor speed. In some examples, the potential trip criterion for potentially tripping the wind turbine is a criterion for potentially tripping a power electronic converter. In some of these examples, the operational parameters may include one or more currents in a machine side converter.

In specific examples, the potential trip criterion may include i².t being above a threshold, wherein i is a current in a machine side converter, and t is a time period for which the current in the machine side converter is above a maximum level.

In some examples, the wind turbine controller is further configured to decrease the speed of the generator to the nominal speed when the values of the operational parameters do not satisfy the potential trip criterion anymore.

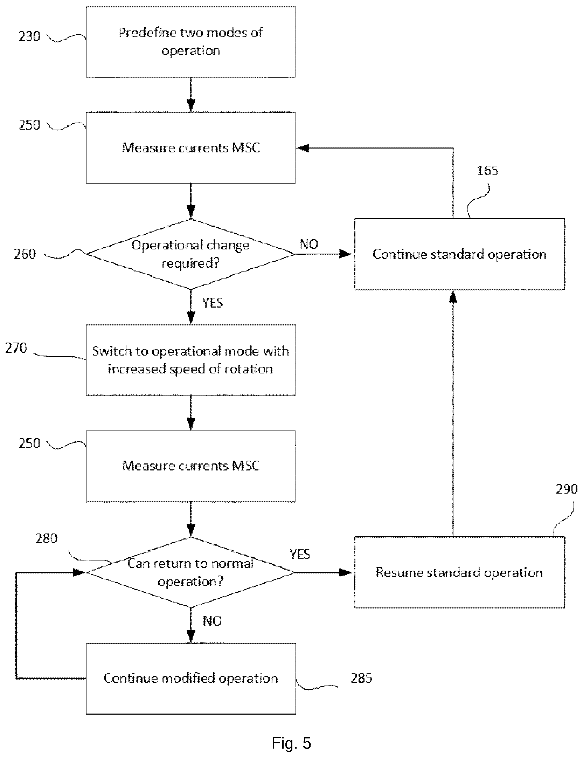

Figure 5 schematically illustrates an example of a method for operating a wind turbine. In an aspect of the present disclosure, a method for operating a wind turbine is provided, which comprises, at block 250, measuring currents in a machine side converter. At block 260, the method may comprise determining that the currents in the machine side converter fulfil a criterion for an operational change. At block 270, a speed of the generator may be increased to a level above a nominal generator speed. The method may further comprise, at block 280, decreasing the speed of the generator to the nominal generator speed or below when the currents in the machine side converter fulfil a criterion for returning to default operation.

In the example of figure 5, the method may comprise, at block 230, predefining at least two modes of operation. One of these modes of operation may be the default mode of operation, and the other of these modes may be the adapted mode of operation with higher rotational speed.

At block 260, a criterion for making an operational change may be related to the protection of the machine side converter, as has been commented hereinbefore. In other examples, other criterions or additional criterions may be used. For evaluation of this criterion, currents in the machine side converter may be determined. Alternatively or additionally, ambient temperature may be measured.

If no operational change is required, default operation may be continued, as indicated at block 165. If an operational change, the wind turbine may switch to an alternative mode of operation in which rotor speed may reach levels above nominal rotor speed.

In any case, at blocks 250, the currents in the machine side converter may continue to be monitored. At block 280, an evaluation may be mode to determine whether the wind turbine can switch back to a default mode of operation. In examples, the criterion for returning to default operation may include that currents in the machine side converter are below predefined levels, e.g. at least for a minimum period of time. If this is not the case, block 285, the mode of operation with increased generator speed may be continued. If a switch back to default mode of operation can be made, the default mode of operation may be resumed, block 290.

With examples of the present disclosure, tripping of the wind turbine may be avoided in situations in which tripping would have occurred with traditional control methods. With examples of the present disclosure, the number of times per week, month or year that a wind turbine trips may be reduced. Increased availability of the wind turbine will lead to an increase in annual energy production, and may also lead to reduced wear of components. Examples of the present disclosure may also reduce the need for cooling of specific components.

In other examples, the method of operating a wind turbine may comprise, at block 250, measuring one or more of the following operational parameters: currents in a machine side converter, wind speed and ambient temperature. At block 260, such a method may comprise determining that the operational parameters fulfil a criterion for an operational change. A single operational parameter, or combinations of operational parameters may fulfill such a criterion. For ambient temperature and wind speed, historical values of the last 24 hours, 12 hours, or 6 hours may be taken into account in examples. In such a method, at block 280, the speed of the generator may be decreased when the operational parameters fulfil a criterion for returning to default operation.

Examples of the present disclosure may be particularly suitable for wind turbines operating at sites with predominantly high ambient temperatures to avoid tripping of the machine side converter. Examples of the present disclosure may also be useful at sites where high ambient temperatures are only seldomly reached. In these cases, it may permit configuring and using components such as a converter close to its operational limits, and in the exceptional cases that a trip would be caused, temporarily allowing for an increase in rotor speed.

Examples of the methods disclosed herein may be implemented with hardware, software, firmware and combinations thereof. Examples of the methods disclosed herein may employ one or more of virtual machines, cloud computing and edge computing.

Those of skill in the art would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and circuits described in connection with the disclosure herein may be implemented or performed with one or more general-purpose processors, a digital signal processor (DSP), cloud computing architecture, an application specific integrated circuit (ASIC), a field programmable gate array (FPGA) or other programmable logic device, discrete gate or transistor logic, discrete hardware components, or any combination thereof designed to perform the functions described herein. A general- purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The present disclosure also relates to a computer program or computer program product comprising instructions (code), which when executed, performs any of the methods disclosed herein.

The computer program may be in the form of source code, object code, a code intermediate source and object code such as in partially compiled form, or in any other form suitable for use in the implementation of the processes. The carrier may be any entity or device capable of carrying the computer program.

If implemented in software/firmware, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A wind turbine (10) comprising:
a wind turbine rotor (18) with a plurality of blades (22);
a generator (42) operatively coupled to the wind turbine rotor (18) for generating electrical power;
a power electronic converter for converting electrical power generated by the generator (42) to a converted AC power of predetermined frequency and voltage;
a wind turbine controller (36) configured to receive values of one or more operational parameters of the wind turbine from one or more sensors and further configured to temporarily increase a speed of the generator (42) to above a nominal generator speed if the values of the operational parameters satisfy a potential trip criterion.

2. The wind turbine of claim 1, wherein the level above the nominal generator speed is 5% or less above the nominal generator speed, and specifically 3% or less above the nominal generator speed.

3. The wind turbine of claim 1 or 2, wherein the wind turbine controller (36) is further configured to maintain a power of the wind turbine (10) at a nominal power.

4. The wind turbine of any of claims 1 - 3, wherein the wind turbine controller (36) is further configured to decrease the speed of the generator (42) to the nominal generator speed when the values of the operational parameters do not satisfy the potential trip criterion anymore.

5. The wind turbine of any of claims 1 - 4, wherein the potential trip criterion for potentially tripping the wind turbine is a criterion for potentially tripping a power electronic converter.

6. The wind turbine of claim 5, wherein the operational parameters include one or more currents in a machine side converter.

7. The wind turbine of claim 6, wherein the potential trip criterion includes i2.t being above a threshold, wherein i is a current in a machine side converter, and t is a time period for which the current in the machine side converter is above a maximum level.

8. The wind turbine of any of claims 1 - 7, wherein the generator (42) is a DFIG generator or a permanent magnet generator.

9. A method for controlling a wind turbine, comprising:
receiving (150) values of operational parameters of the wind turbine;
determining (160) that one or more of the operational parameters satisfy a potential trip criterion for potentially tripping the wind turbine;
sending instructions (170) to wind turbine actuators to temporarily increase a speed of a wind turbine rotor of the wind turbine to a level above a nominal rotor speed;
determining (180) that the operational parameters do not satisfy the potential trip criterion anymore; and
sending instructions (190) to wind turbine actuators to reduce the speed of the wind turbine rotor to the nominal rotor speed.

10. The method of claim 9, wherein the level above the nominal rotor speed is 5% or less above the nominal rotor speed, and specifically 3% or less above the nominal rotor speed.

11. The method of claim 9 or 10, wherein temporarily increasing the speed of the wind turbine rotor of the wind turbine to a level above a nominal rotor speed comprises maintaining a power of the wind turbine at a nominal power.

12. The method of any of claims 9 - 11, wherein the potential trip criterion for potentially tripping the wind turbine is a criterion for potentially tripping a power electronic converter.

13. The method of claim 12, wherein the operational parameters include one or more currents in a machine side converter.

14. The method of claim 12 or 13, wherein the operational parameters include an ambient temperature and/or a temperature in a wind turbine component.

15. The method of any of claims 9 - 14, the speed of the wind turbine rotor of the wind turbine is increased to the level above the nominal rotor speed for 30 minutes or less, specifically for 20 minutes or less.
